# EUROPÄISCHE PATENTSCHRIFT

(11) **EP 3 259 561 B1**
(45) Veröffentlichungstag und Bekanntmachung des Hinweises auf die Patenterteilung: **17.06.2020**
(21) Anmeldenummer: 16702508.9
(22) Anmeldetag: 27.01.2016
(51) Int. Cl.: G01D 11/24, E01F 11/00

(54) **SENSORVORRICHTUNG**
SENSOR APPARATUS
DSIPOSITIF DE DÉTECTION

(30) Priorität: 17.02.2015 DE 102015202780
(43) Veröffentlichungstag der Anmeldung: 27.12.2017
(73) Patentinhaber: Robert Bosch GmbH, 70442 Stuttgart (DE)
(72) Erfinder: SODAN, Lars, 72336 Balingen (DE); SCHMID, Ronny, 72766 Reutlingen (DE)
(86) Internationale Anmeldenummer: PCT/EP2016/051624
(87) Internationale Veröffentlichungsnummer: WO 2016/131617

(56) Entgegenhaltungen:
- EP-A1- 0 259 523
- WO-A1-97/28519
- WO-A1-2006/005208
- FR-A1- 2 969 281
- US-A1- 2012 007 749
- US-A1- 2012 293 339

## Beschreibung

Die Erfindung betrifft eine Sensorvorrichtung.

### Stand der Technik

Sensoren sind üblicherweise in einem einteiligen Gehäuse angeordnet. Ein solches Gehäuse beinhaltet in der Regel die gesamte Elektronik, die Sensorik und elektrische Verbindungen. Das Gehäuse selbst ist dann mechanisch an einem Untergrund angebunden.

Die Offenlegungsschrift WO 97/28519 A1 zeigt einen Detektor.

Die Offenlegungsschrift FR 2 969 281 A1 zeigt eine Messvorrichtung.

Die Offenlegungsschrift US 2012/293339 A1 zeigt ein elektronisches Gehäuse.

Die Offenlegungsschrift WO 2006/005208 A1 zeigt ein Detektionsterminal.

Aus der US2012/007749 A1 ist eine Sensorvorrichtung mit einer Sensorkapsel und eine Halterung an einer Verkehrsinfrastruktur bekannt. Sensoren sind innerhalb der Sensorkapsel angeordnet und die Sensorkapsel ist lösbar in der Halterung befestigt.

### Offenbarung der Erfindung

Die der Erfindung zugrunde liegende Aufgabe besteht darin, eine verbesserte Sensorvorrichtung bereitzustellen.

Diese Aufgabe wird mittels des Gegenstands des unabhängigen Anspruchs gelöst. Vorteilhafte Ausgestaltungen der Erfindung sind Gegenstand von abhängigen Unteransprüchen.

Dadurch, dass die Sensorkapsel lösbar in der Halterung befestigt ist, wird insbesondere der technische Vorteil bewirkt, dass die Sensorkapsel ausgetauscht werden kann, ohne zugleich die Halterung auszutauschen. Ferner wird in vorteilhafter Weise bewirkt, dass die Halterung noch ohne die Sensorkapsel an die Verkehrsinfrastruktur befestigt werden kann. Dies kann eine Montage oder auch Demontage der Halterung vereinfachen. Insbesondere kann bei einer Befestigung oder Demontage der Halterung an respektive von die respektive der Verkehrsinfrastruktur verhindert werden, dass die Sensorkapsel beschädigt wird. Denn diese kann zur Montage respektive Demontage von der Halterung entfernt werden. Dies aufgrund der lösbaren Befestigung.

Des Weiteren weist dieses Konzept den Vorteil auf, dass eine kosteneffiziente Installation und Deinstallation der Sensorvorrichtung bewirkt werden kann. Denn so kann, wenn die Sensorvorrichtung nur temporär an einer Verkehrsinfrastruktur angeordnet sein soll, nach einer Nutzungsdauer lediglich die Sensorkapsel entfernt werden, wohingegen die Halterung weiterhin an der Verkehrsinfrastruktur befestigt bleibt. Das heißt also, dass die Sensorkapsel anschließend an einer anderen Halterung wiederverwendet werden kann. Somit entstehen bei diesem Konzept in der Regel lediglich Kosten betreffend die Halterung.

Erfindungsgemäß ist vorgesehen, dass die Halterung zusätzlich zur Befestigungsfunktionalität noch eine oder mehrere weitere elektrische oder elektronische Funktionalitäten aufweist. Dadurch wird insbesondere der technische Vorteil bewirkt, dass eine effiziente und effektive Nutzung der Halterung bewirkt werden kann. Denn obwohl nur ein Bauteil vorgesehen ist, weist dieses mehrere Funktionen auf.

In einer anderen Ausführungsform ist vorgesehen, dass die Halterung eine Kommunikationsschnittstelle aufweist, die ausgebildet ist, Sensordaten des oder der Sensoren über ein Kommunikationsnetzwerk zu senden, so dass die Halterung als weitere Funktionalität eine Kommunikationsfunktionalität aufweist. Dadurch wird insbesondere der technische Vorteil bewirkt, dass die Sensordaten über ein Kommunikationsnetzwerk gesendet werden können, zum Beispiel an Teilnehmer des Kommunikationsnetzwerks. Somit können die Sensordaten auch entfernt von der Sensorvorrichtung bereitgestellt und gegebenenfalls analysiert werden.

Nach einer Ausführungsform ist vorgesehen, dass die Sensorkapsel eine Kommunikationsschnittstelle aufweist, die ausgebildet ist, Sensordaten des oder der Sensoren über ein Kommunikationsnetzwerk zu senden, zum Beispiel an einen Server. Das heißt also insbesondere, dass die Sensorkapsel eine Kommunikationsfunktionalität aufweist. Auch dadurch kann insbesondere der technische Vorteil bewirkt werden, dass die Sensordaten Teilnehmern des Kommunikationsnetzwerks zur Verfügung gestellt werden können.

In einer weiteren Ausführungsform ist vorgesehen, dass die Kommunikationsschnittstelle der Sensorkapsel ausgebildet ist, die Sensordaten des oder der Sensoren an die Kommunikationsschnittstelle der Halterung zu senden. Dies beispielsweise über ein Kommunikationsnetzwerk. Insbesondere ist entsprechend die Kommunikationsschnittstelle der Halterung ausgebildet, diese Sensordaten des oder der Sensoren von der Kommunikationsschnittstelle der Sensorkapsel zu empfangen.

Das heißt also insbesondere, dass nach einer Ausführungsform vorgesehen ist, dass eine Kommunikationsverbindung zwischen der Halterung und der Sensorkapsel gebildet ist. Dies insbesondere dann, wenn die Sensorkapsel lösbar in der Halterung befestigt ist. Die Kommunikationsverbindung umfasst insbesondere eine drahtlose und/oder eine drahtgebundene Kommunikationsverbindung. Entsprechend sind die Kommunikationsschnittstellen der Sensorkapsel und der Halterung ausgebildet.

Nach einer Ausführungsform ist die drahtgebundene Kommunikationsverbindung mittels elektrischer Kontakte gebildet.

Nach einer Ausführungsform ist eine drahtlose Kommunikationsverbindung mittels einer Spule gebildet. Zum Beispiel umfasst die drahtlose Kommunikationsverbindung eine NFC-Kommunikationsverbindung. Hierbei "NFC" für "Near Field Communication", also Nahfeldkommunikation.

Nach einer Ausführungsform ist vorgesehen, dass die drahtlose Kommunikationsverbindung eine optische Kommunikationsverbindung umfasst. Eine optische Kommunikationsverbindung kann beispielsweise mittels LEDs gebildet sein. Hierbei steht LED für "Light Emitting Diode", also Leuchtdiode.

Das heißt also, dass nach einer Ausführungsform die Kommunikationsschnittstelle ausgebildet ist, die Sensordaten mittels einer optischen Kommunikationsverbindung von dem oder den Sensoren zu empfangen. Das heißt also insbesondere, dass die Sensordaten optisch von der Sensorkapsel an die Halterung übertragen werden. Die Sensorkapsel umfasst zum Beispiel eine oder mehrere LEDs zur Übertragung von Sensordaten an die Halterung.

In einer weiteren Ausführungsform ist vorgesehen, dass die Halterung einen elektrischen Energiespeicher zum Versorgen des oder der Sensoren mit elektrischer Energie aufweist, so dass die Halterung als weitere Funktionalität eine Energieversorgungsfunktionalität aufweist. Dadurch wird insbesondere der technische Vorteil bewirkt, dass die Sensoren oder der Sensor mit elektrischer Energie versorgt werden können. Dadurch kann beispielsweise auf einen separaten elektrischen Energiespeicher in der Sensorkapsel verzichtet werden. Sofern aber ein solcher elektrischer Energiespeicher in der Sensorkapsel vorhanden sein sollte, kann der elektrische Energiespeicher der Halterung als ein redundanter elektrischer Energiespeicher verwendet werden. Somit ist also eine Redundanz betreffend eine elektrische Energieversorgung des oder der Sensoren geschaffen.

In einer anderen Ausführungsform ist vorgesehen, dass die Halterung einen Datenspeicher zum Speichern von Sensordaten des oder der Sensoren umfasst. Dadurch wird insbesondere der technische Vorteil bewirkt, dass die Sensordaten abgespeichert werden können, sodass sie beispielsweise noch zu einem späteren Zeitpunkt zur Verfügung gestellt werden können. Ein Datenspeicher umfasst insbesondere einen flüchtigen und/oder nichtflüchtigen Datenspeicher.

In einer anderen Ausführungsform ist vorgesehen, dass die Halterung einen Datenspeicher zum Speichern von Sensordaten des oder der Sensoren und einen elektrischen Energiespeicher zum Puffern der in dem Datenspeicher gespeicherten Sensordaten aufweist, so dass die Halterung als weitere Funktionalitäten eine Sensordatenspeicherungsfunktionalität und eine Sensordatenpufferfunktionalität aufweist. Dadurch wird insbesondere der technische Vorteil bewirkt, dass die Sensordaten auch noch zu einem späteren Zeitpunkt zur Verfügung gestellt werden können. Aufgrund der Sensordatenpufferfunktionalität bleiben die Daten beispielsweise auch bei einem Ausfall einer Primärenergieversorgung, beispielsweise durch den Energiespeicher der Sensorkapsel, erhalten.

In einer anderen Ausführungsform ist vorgesehen, dass die Halterung eine Erfassungseinrichtung umfasst, die ausgebildet ist, eine Anzahl von Sensorkapseltauschzyklen zu erfassen, so dass die Halterung als weitere Funktionalität eine Sensorkapseltauschzyklenverfolgungsfunktionalität aufweist. Dadurch wird insbesondere der technische Vorteil bewirkt, dass verfolgt werden kann, wie oft die Sensorkapsel bereits getauscht wurde.

In einer anderen Ausführungsform ist vorgesehen, dass die Halterung einen Prozessor umfasst, der ausgebildet ist, den oder die Sensoren zu programmieren, so dass die Halterung als weitere Funktionalität eine Sensorprogrammierungsfunktionalität aufweist. Dadurch wird insbesondere der technische Vorteil bewirkt, dass der oder die Sensoren programmiert werden können. So kann beispielsweise der Prozessor eine neue Firmware in den oder die Sensoren schreiben oder flashen. Dadurch kann beispielsweise ein Sensor neu justiert werden. Eventuelle Fehler, die während der Herstellung des Sensors oder der Sensoren beim Sensor oder bei den Sensoren aufgetreten sind, können somit gegebenenfalls nachträglich per Software korrigiert werden.

In einer anderen Ausführungsform ist vorgesehen, dass die lösbare Befestigung mittels eines Bajonettverschlusses und/oder mittels einer Verschraubung und/oder mittels einer Verrastung und/oder mittels einer Verklipsung und/oder mittels einer Klebverbindung und/oder mittels eines Einlegens der Sensorkapsel in die Halterung gebildet ist. Durch die vorstehend genannten Befestigungsarten wird insbesondere der technische Vorteil bewirkt, dass eine effiziente lösbare Befestigung der Sensorkapsel an der Halterung ermöglicht ist.

In einer weiteren Ausführungsform ist vorgesehen, dass der oder die Sensoren einen oder mehrere der folgenden Sensoren umfassen: einen Umfeldsensor, einen Parksensor zum Erfassen eines Belegtzustands einer Parkposition, einen Verkehrssensor zum Überwachen eines Verkehrsflusses und/oder zum Messen einer Verkehrsdichte und einen Lagersensor zum Überwachen einer Containerbelegung.

Ein Umfeldsensor ist beispielsweise: ein Ultraschallsensor, ein Magnetfeldsensor, ein Lidarsensor, ein Lasersensor, ein Radarsensor oder ein Videosensor oder Kombinationen dieser Sensoren. Mittels eines solchen Umfeldsensors ist insbesondere eine sensorische Erfassung eines Umfelds der Sensorkapsel ermöglicht.

Der Parksensor ist beispielsweise als ein Umfeldsensor gebildet.

Der Verkehrssensor ist zum Beispiel als ein Umfeldsensor gebildet.

Der Lagersensor ist zum Beispiel als ein Umfeldsensor gebildet.

Durch die Verwendung eines Parksensors kann in vorteilhafter Weise bewirkt werden, dass ein Belegtzustand einer Parkposition, beispielsweise einer Parkposition eines Parkplatzes, erfasst werden kann. Das heißt also, dass ein Parksensor im Sinne der vorliegenden Erfindung erfassen kann, ob eine Parkposition belegt oder nicht belegt, also frei, ist. Eine solche Sensorvorrichtung wird nach einer Ausführungsform zur Überwachung eines Belegtzustands einer Parkposition verwendet.

Bei der Verwendung eines Verkehrssensors kann die Sensorvorrichtung somit in vorteilhafter Weise für eine Überwachung eines Verkehrsflusses und/oder für eine Messung einer Verkehrsdichte verwendet werden, was nach einer Ausführungsform so vorgesehen ist.

Bei der Verwendung eines Lagersensors kann nach einer Ausführungsform die Sensorvorrichtung für eine Überwachung einer Containerbelegung verwendet werden, was nach einer Ausführungsform so vorgesehen ist. Dies beispielsweise in einem Lager für Container.

Nach einer weiteren Ausführungsform ist vorgesehen, dass die Verkehrsinfrastruktur einen Parkplatz umfasst, innerhalb welchem die Halterung befestigt ist, oder eine Straße umfasst, an welcher die Halterung befestigt ist, oder ein Containerlager umfasst, innerhalb welchem die Halterung befestigt ist.

Das heißt also insbesondere, dass die Halterung innerhalb eines Parkplatzes befestigt ist. Ein solcher Parkplatz ist eine Verkehrsinfrastruktur. Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Das heißt also insbesondere, dass die Halterung beispielsweise an einer Decke, einer Wand oder an einer Säule oder auf einer Parkfläche oder auf einem Parkstand eines Parkplatzes, zum Beispiel einer Garage, angeordnet oder befestigt ist.

In einer anderen Ausführungsform umfasst die Verkehrsinfrastruktur ein feststehendes oder stationäres Objekt, welches an einer Straße angeordnet ist. Zum Beispiel kann es sich hierbei um ein Verkehrszeichen, eine Lichtsignalanlage, eine Brücke, einen Tunnel handeln.

Das heißt also insbesondere, dass die Halterung zum Beispiel an einer Brücke, einem Tunnel, einer Lichtsignalanlage, einer Laterne, einem Verkehrsschild angeordnet ist. Die Sensorvorrichtung kann dann in effizienter Weise für eine Überwachung des Verkehrsflusses und/oder für eine Messung einer Verkehrsdichte verwendet werden.

Die Halterung ist zum Beispiel innerhalb eines Lagers angeordnet. Beispielsweise ist die Halterung an einem Containerlagerplatz angeordnet.

Nach einer Ausführungsform umfasst die Sensorkapsel einen Speicher, insbesondere einen elektronischen und/oder magnetischen Speicher. Insbesondere ist ein solcher Speicher ein Datenspeicher für die Sensordaten.

Nach einer Ausführungsform umfasst die Sensorkapsel einen Mikrocontroller zur Steuerung des Sensors oder der Sensoren.

Nach einer Ausführungsform umfasst die Sensorkapsel einen Schalter zum An- oder Ausschalten des Sensors oder der Sensoren, also einem An-/Aus-Schalter.

Nach einer Ausführungsform umfasst die Sensorkapsel ein Bedienelement oder mehrere Bedienelemente zum Bedienen des Sensors oder der Sensoren.

Nach einer Ausführungsform umfasst die Sensorkapsel einen elektrischen Energiespeicher zur elektrischen Energieversorgung des oder der Sensoren und gegebenenfalls beispielsweise von weiteren elektronischen Bauteilen, die innerhalb der Sensorkapsel angeordnet sind, wie zum Beispiel ein Speicher und/oder eine Mikrocontroller.

Nach einer Ausführungsform erfüllt die Sensorkapsel eine vorbestimmte Schutzart gemäß den bekannten IP-Codes. Hierbei steht die Abkürzung "IP" für "International Protection". Für die Codierung der IP-Codes gibt es beispielsweise die DIN EN 60529 oder die VDE 0470-1 oder die DIN 40050 Teil 9. Das heißt also insbesondere, dass die Sensorkapsel die in ihr angeordneten Elemente gegen äußere Einflüsse abkapselt und somit schützt.

Gemäß einer Ausführungsform ist vorgesehen, dass die Halterung und/oder die Sensorkapsel eine Energieübertragungseinrichtung, insbesondere eine Spule, zum drahtlosen Übertragen von elektrischer Energie von der Sensorkapsel zur Halterung und/oder umgekehrt umfassen. Dadurch ist insbesondere eine effiziente Übertragung von elektrischer Energie ermöglicht. Das heißt also zum Beispiel, dass elektrische Energie zum Beispiel induktiv übertragen werden kann. Insbesondere umfassen die Halterung und die Sensorkapsel jeweils eine Spule zum Übertragen und/oder Empfangen von elektrischer Energie.

Nach einer Ausführungsform ist vorgesehen, dass die Sensorkapsel und/oder die Halterung einen Prozessor umfassen, der ausgebildet ist, eine Identifikation aus der Halterung respektive der Sensorkapsel auszulesen, zum Beispiel induktiv auszulesen, insbesondere mittels Spulen. Zum Beispiel handelt es sich bei der Identifikation um eine Platzidentifikation. Eine Platzidentifikation heißt, dass eine bestimmte Parkposition identifiziert wird respektive werden kann, zum Beispiel mittels einer Zahl.

In einer Ausführungsform umfasst die Sensorkapsel einen Prozessor zum Ansteuern und/oder Auslesen des oder der Sensoren.

Die Formulierung respektive umfasst insbesondere die Formulierung "und/oder".

Die Erfindung wird im Folgenden anhand von bevorzugten Ausführungsbeispielen näher erläutert. Hierbei zeigen
- Fig. 1: eine Sensorvorrichtung im unmontierten Zustand und
- Fig. 2: die Sensorvorrichtung gemäß Fig. 1 im montierten Zustand.

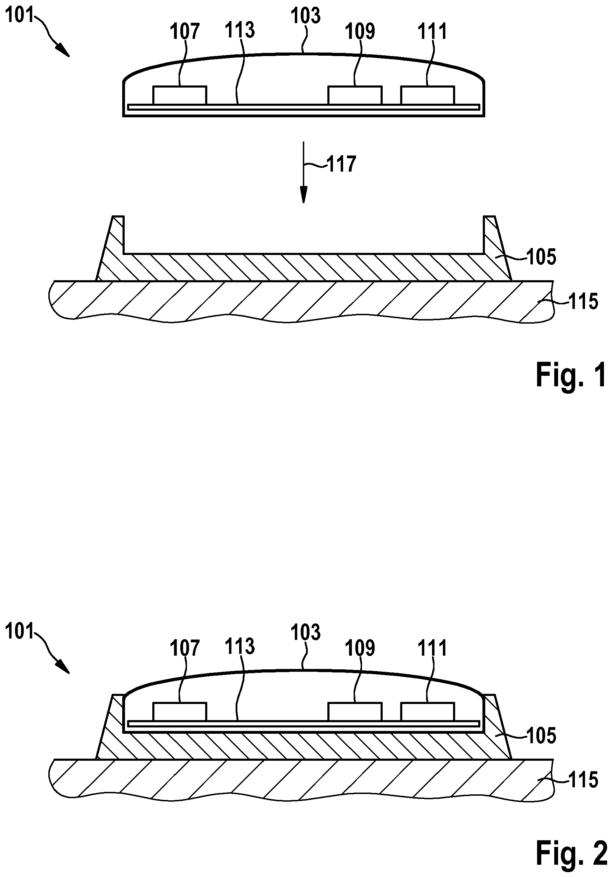

Fig. 1 zeigt eine Sensorvorrichtung 101 in einem unmontierten Zustand. Das heißt, dass eine Sensorkapsel 103 noch nicht in einer Halterung 105 lösbar befestigt ist. Das heißt also, dass die Sensorkapsel 103 und die Halterung 105 noch getrennt voneinander sind.

Die Sensorkapsel 103 weist einen Sensor 107 auf. In einer nicht gezeigten Ausführungsform sind mehrere Sensoren vorgesehen, die insbesondere gleich oder beispielsweise unterschiedlich gebildet sind. Der Sensor 107 ist beispielsweise ein Umfeldsensor.

Die Sensorkapsel 103 weist ferner eine Kommunikationsschnittstelle 109 auf. Die Kommunikationsschnittstelle 109 ist ausgebildet, Sensordaten des Sensors 107 über ein Kommunikationsnetzwerk zu senden. Die Kommunikationsschnittstelle 109 kann im Fall einer drahtlosen Kommunikationsverbindung als eine Funkschnittstelle bezeichnet werden.

Ferner umfasst die Sensorkapsel 103 einen elektrischen Energiespeicher 111, der allgemein auch als eine elektrische Energieversorgung bezeichnet werden kann. Der elektrische Energiespeicher 111 versorgt zum Beispiel den Sensor 107 und die Kommunikationsschnittstelle 109 mit elektrischer Energie.

Der Sensor 107, die Kommunikationsschnittstelle 109 und der elektrische Energiespeicher 111 sind auf einem Träger 113 angeordnet. Der Träger 113 ist nach einer Ausführungsform eine Leiterplatte. Das heißt also insbesondere, dass der Sensor 107, der elektrische Energiespeicher 111 und die Kommunikationsschnittstelle 109 auf einer Leiterplatte angeordnet sein können. Dadurch wird insbesondere der technische Vorteil bewirkt, dass eine elektrische Kontaktierung und/oder Verschaltung der einzelnen Elemente einfach und effizient durchgeführt werden kann.

Der elektrische Energiespeicher 111, die Kommunikationsschnittstelle 109, der Sensor 107 und der Träger 113 sind innerhalb der Sensorkapsel 103 angeordnet. Das heißt also, dass die Sensorkapsel 103 die vorstehend genannten Elemente einkapselt.

Die Verkehrsinfrastruktur 115 ist hier lediglich schematisch dargestellt. Sie kann beispielsweise ein Parkplatz sein. Beispielsweise ist die Verkehrsinfrastruktur 115 eine Straße oder eine Fahrbahn. Beispielsweise ist die Verkehrsinfrastruktur eine Lichtsignalanlage, ein Verkehrszeichen, ein Mast, ein Pfahl, eine Leitplanke, ein Gestell für Verkehrszeichen oder Hinweisschilder, eine Brücke oder ein Tunnel.

Das Bezugszeichen 117 zeigt auf einen Pfeil, der eine Montagerichtung angibt. Das heißt also, dass die Sensorkapsel 103 in Richtung des Pfeils 117 in die Halterung 105 eingelegt wird.

Erfindungsgemäß ist vorgesehen, dass die Halterung 105 über die reine Befestigungsfunktionalität noch weitere Funktionalitäten oder noch eine weitere Funktionalität aufweist. Beispielsweise weist die Halterung 105 eine Kommunikationsfunktionalität auf. Zum Beispiel weist die Halterung 105 eine Energieversorgungsfunktionalität auf. Das heißt also beispielsweise, dass die Halterung 105 einen elektrischen Energiespeicher und/oder eine Kommunikationsschnittstelle aufweist.

Fig. 2 zeigt die Sensorvorrichtung 101 in einem montierten Zustand. Das heißt, dass im montierten Zustand die Sensorkapsel 103 lösbar an der Halterung 105 befestigt ist. Gemäß Fig. 2 ist hier insbesondere die Sensorkapsel 103 in die Halterung 105 eingelegt. In nicht gezeigten Ausführungsbeispielen sind zusätzlich oder anstelle weitere Befestigungsmöglichkeiten vorgesehen. Zum Beispiel: ein Bajonettverschluss und/oder eine Verschraubung und/oder eine Verrastung und/oder eine Verklipsung und/oder eine Klebverbindung und/oder eine magnetische Verbindung.

Die Erfindung umfasst also insbesondere und unter anderem den Gedanken, eine zumindest zweiteilige Sensorvorrichtung vorzusehen: hierbei wird der eine Teil durch die Sensorkapsel gebildet und der andere Teil wird durch die Halterung gebildet. Das heißt also, dass die Sensorvorrichtung zumindest in zwei Bauteile getrennt wird: eine Halterung und eine Sensorkapsel.

Erfindungsgemäß umfasst die Halterung eine oder mehrere Funktionalitäten. Beispielsweise weist die Halterung eine Kommunikationsfunktionalität auf. Die Sensorkapsel transferiert Sensordaten zur Halterung, die dann diese Sensordaten über ein Kommunikationsnetzwerk mittels der Kommunikationsschnittstelle senden kann. Beispielsweise kann ein Datentransfer über elektrische Kontakte und/oder drahtlos, zum Beispiel mittels Spule (NFC) und/oder optisch (LED) durchgeführt werden. Beispielsweise umfasst die Halterung keine elektrische Energieversorgung. Das heißt also, dass die Halterung frei von einem elektrischen Energiespeicher ist.

Nach einer Ausführungsform ist ein elektrischer Energiespeicher ein Akkumulator oder eine Batterie. Insbesondere sind sowohl eine Batterie als auch Akkumulator vorgesehen.

Nach einer Ausführungsform umfasst die Halterung einen elektrischen Energiespeicher. Dieser kann beispielsweise eine Pufferfunktionalität für eine Datenspeicherung in der Halterung und/oder eine Energieversorgungsfunktionalität der Sensorkapsel übernehmen.

Eine Funktionalität ist beispielsweise eine Platzidentifikation, was bei Bedarf einen reinen Sensorkapseltausch ermöglicht. Eine Platzidentifikation heißt, dass eine bestimmte Parkposition identifiziert wird respektive werden kann, zum Beispiel mittels einer Zahl. So kann zum Beispiel eine bestimmte Parkposition innerhalb eines Parkplatzes, zum Beispiel eines Parkhauses, identifziert werden (zum Beispiel: Platz Nummer 198 im Parkhaus). Das heißt, dass die Halterung zum Beispiel eine Platzidentifikationsfunktionalität aufweisen kann. Dadurch wird zum Beispiel der technische Vorteil bewirkt, dass die Sensorkapsel einfach ausgetauscht werden kann, ohne dass erneut eine Platzidentifikation vorgenommen oder programmiert werden muss.

Es kann also beispielsweise auf eine ID-Programmierung verzichtet werden. "ID" steht für Identifikation und bedeutet eine Platzidentifikation. Das heißt, dass, wenn die Halterung eine Platzidentifikationsfunktionalität aufweist, eine erneute ID-Programmierung bei einem Sensorkapseltausch nicht mehr vorgenommen werden muss. Es reicht somit eine einmalige ID-Programmierung bei einer Erstinstallation. Hier wird zum Beispiel vorgegeben, welche Halterung respektive Sensorkapsel an welcher Parkposition installiert wurde.

Insbesondere kann eine Funktionalität beinhalten, dass eine Verfolgung von Tauschzyklen, ein sogenanntes Tracking, durchgeführt wird.

Die Funktionalität kann beinhalten, dass eine Speicherung und/oder eine Programmierung vorgesehen sein können. Beispielsweise kann die Programmierung mittels eines QR-Codes, insbesondere mittels eines numerischen Codes, durchgeführt werden. Die Speicherung kann beispielsweise mittels RFID oder eines Flash-Speichers realisiert werden. Dies kann insbesondere ab Werk oder bei Erstinstallation durchgeführt werden.

Die Sensorkapsel umfasst nach einer Ausführungsform die Sensorik, also einen oder mehrere Sensoren, die beispielsweise ausgebildet sind, eine Parkplatzbelegung zu detektieren, und nach einer weiteren Ausführungsform eine elektrische Energieversorgung (vorzugsweise eine oder mehrere Batterien), eine Funkschnittstelle, sowie nach weiteren Ausführungsformen: einen Datenspeicher für die Sensordaten, einen Mikrocontroller, ein Bedienelement, einen An-/AusSchalter.

Die lösbare Verbindung oder Befestigung zwischen der Sensorkapsel und der Halterung ist nach Ausführungsformen wie folgt realisiert, um die Sensorkapsel zuverlässig und reversibel mit der Halterung zu verbinden: Bajonettverschluss, Verschraubung, vorzugsweise mittels eines Spezialwerkzeugs, Verklipsen, einfaches Einlegen, Verkleben.

Ein eventuell erforderlicher Elektroniktausch (also ein Tausch der Sensorkapsel) kann dadurch erfindungsgemäß schnell, sicher, günstig und effizient im laufenden Betrieb, beispielsweise im laufenden Betrieb eines Parkplatzes, beispielsweise eines Parkhauses, erfolgen.

Der Elektronikteil, also zum Beispiel der Sensorteil (also die Sensorkapsel), kann bei Bedarf wiederverwendet werden, falls zum Beispiel die Halterung irreversibel mit dem Untergrund verbunden wurde und/oder weil die Halterung bei einer Demontage zerstört wurde. Ebenso, falls im Falle einer erforderlichen Wartung des Untergrunds (zum Beispiel Aufbringung eines neuen Straßenbelags) der Sensor, insbesondere der Parksensor, temporär entfernt werden muss, wodurch also Kosten eingespart werden können.

Ferner ist eine hohe Zukunftsfähigkeit gegeben, da der Sensor im Feld ausgetauscht werden kann, also eine Austauschbarkeit des Sensors im Feld ist möglich ist. Dies ermöglicht in vorteilhafter Weise eine schnelle und effiziente Reaktion auf zum Beispiel neue Funkstandards, Verbesserungen im Sensor oder in den Sensoren, also allgemein in Sensorelementen, eine erforderliche Regionalisierung, oder auf eine erweiterte Funktion.

Eine Einzelinstallation, eine sogenannte Stand-alone-Installation, der Sensorkapsel allein ist auch nach einer Ausführungsform vorgesehen und möglich. Zum Beispiel bei einer Versenkung oder einem Eingießen der Sensorkapsel im Untergrund. Das heißt also, dass nach einer Ausführungsform die Sensorkapsel im Untergrund versenkt und/oder eingegossen ist. Somit kann zum Beispiel die Sensorkapsel direkt bei der Herstellung des Untergrunds, zum Beispiel der Fahrbahn, in diesen eingegossen werden. Diese Art der Nutzung weist eine hohe Fertigungssynergie auf.

Der Sensor ist beispielsweise ein Parksensor für ein Parkraummanagement. Der Sensor ist zum Beispiel ein Sensor zur Messung und/oder Überwachung des Verkehrsflusses und/oder der Verkehrsdichte. Der Sensor wird beispielsweise zur Überwachung einer Containerbelegung in einem Containerlager verwendet.

Die Erfindung weist also insbesondere den Vorteil einer einfachen Installation mit einer einfachen Deinstallation auf. Dies ist effizient und kostengünstig. Insbesondere werden wenig Fachkenntnisse benötigt. Also sind wenig Fachkenntnisse erforderlich.

Nach einer Ausführungsform ist die Halterung separat auf einem Untergrund montierbar. Das heißt also, dass nach einer Ausführungsform die Halterung auf einem Untergrund montiert ist. Eine Montageart ist zum Beispiel eine Verschraubung und/oder Verklebung. Das heißt also, dass nach einer Ausführungsform die Halterung verschraubt und/oder verklebt mit der Verkehrsinfrastruktur, zum Beispiel mit einem Untergrund, ist.

Insbesondere ist ein einfacher Zugang für Montagewerkzeug vorgesehen und somit auch gewährleistet.

Insbesondere sind erweiterte Montagefreiheitsgrade vorgesehen, wie zum Beispiel ein aushärtbarer Kleber oder eine entfernbare Halterung mittels Einwirkung von Temperatur und/oder UV-Strahlung und/oder einer erhöhten Anpresskraft.

Nach einer Ausführungsform ist die Sensorkapsel während einer Montage respektive Demontage der Halterung nicht mit der Halterung verbunden und kann während der Installation respektive Deinstallation somit nicht beschädigt werden. Dies ist also ein besonders robustes System.

Insbesondere erlaubt die Erfindung eine kosteneffiziente Installation und die Installation in temporären Parkplätzen. Denn nur die Halterungskosten fallen an. Denn die Sensorkapsel kann zum Beispiel an anderer Stelle wiederverwendet werden.

Mehrere Ausführungsformen der Halterung sind vorgesehen abhängig von einem Untergrund und/oder erlaubter und/oder möglicher Montageart. Zum Beispiel muss bei einer Ausführung der Halterung für eine Tiefgarage die Halterung nur geringe Anforderungen bezüglich Umgebungseinflüssen (zum Beispiel Temperatur, Vereisung) aufweisen. Beispielsweise ist die Halterung auf einer Schotterfläche angeordnet. Dies beispielsweise mittels eines Einschlagnagels und/oder mittels eines Ankers. In beiden Applikationen (Tiefgarage und Schotterfläche) kann nach einer Ausführungsform die gleiche Sensorkapsel verwendet werden. Dies erlaubt also ein breitestes Anwendungsspektrum bei Nutzung von Synergie im Fertigungsvolumen der Sensorkapsel, was eine vorteilhafte Kosteneffizienz mit sich bringt.

Insbesondere weist die Erfindung den Vorteil einer einfachen Wartung während des Betriebs der Sensorvorrichtung auf. Denn die Sensorkapsel stellt insbesondere eine Kapselung der gesamten Elektronik, Sensorik, Kommunikation bereit. Dies bietet beispielsweise Vorteile in Bezug auf einen ESD-Schutz (ESD: Electro Static Discharge, Schutz vor einer elektrostatischen Entladung), Schutz für Feuchte und Vereisung. Insbesondere ist eine kontrollierte Abdichtung im Fertigungsprozess möglich. Dies macht also die Sensorvorrichtung besonders zuverlässig. Insbesondere ist die Abdichtung prüfbar und reproduzierbar. Insbesondere kann die Sensorkapsel mittels einer Vielzahl an Abdichtungsverfahren abgekapselt werden. Zum Beispiel mittels Verschrauben und/oder Laserschweißen und/oder Einmolden.

Insbesondere ist ein Batterietausch und/oder eine etwaige Wartung der Elektronik/Sensorik in sicherer/geeigneter Umgebung (offsite) möglich. Dadurch wird ein hohes Maß an Robustheit des Sensorsystems, also der Sensorvorrichtung, ermöglicht oder bereitgestellt. Dies ist insbesondere essenziell für eine breite und zuverlässige Anwendung außerhalb geschlossener Gebäude.

## Patentansprüche

1. Sensorvorrichtung (101), umfassend:
- eine Sensorkapsel (103), die eine vorbestimmte Schutzart gemäß den bekannten IP-Codes erfüllt,
- innerhalb welcher ein oder mehrere Sensoren (107) angeordnet sind, und
- eine Halterung (105),
- wobei die Halterung (105) an einer Verkehrsinfrastruktur (115) befestigt ist und
- wobei die Sensorkapsel (103) lösbar in der Halterung (105) befestigt ist, **dadurch gekennzeichnet, dass** die Halterung (105) zusätzlich zur Befestigungsfunktionalität noch eine oder mehrere weitere elektrische oder elektronische Funktionalitäten aufweist.

2. Sensorvorrichtung (101) nach Anspruch 1, wobei die Halterung (105) eine Kommunikationsschnittstelle aufweist, die ausgebildet ist, Sensordaten des oder der Sensoren (107) über ein Kommunikationsnetzwerk zu senden, so dass die Halterung (105) als weitere Funktionalität eine Kommunikationsfunktionalität aufweist.

3. Sensorvorrichtung (101) nach Anspruch 2, wobei die Kommunikationsschnittstelle ausgebildet ist, die Sensordaten mittels einer optischen und/oder elektrischen Kommunikationsverbindung von dem oder den Sensoren (107) zu empfangen.

4. Sensorvorrichtung (101) nach einem der Ansprüche 1 bis 3, wobei die Halterung (105) einen elektrischen Energiespeicher zum Versorgen des oder der Sensoren (107) mit elektrischer Energie aufweist, so dass die Halterung (105) als weitere Funktionalität eine Energieversorgungsfunktionalität aufweist.

5. Sensorvorrichtung (101) nach einem der Ansprüche 1 bis 4, wobei die Halterung (105) einen Datenspeicher zum Speichern von Sensordaten des oder der Sensoren (107) und einen elektrischen Energiespeicher zum Puffern der in dem Datenspeicher gespeicherten Sensordaten aufweist, so dass die Halterung (105) als weitere Funktionalitäten eine Sensordatenspeicherungsfunktionalität und eine Sensordatenpufferfunktionalität aufweist.

6. Sensorvorrichtung (101) nach einem der Ansprüche 1 bis 5, wobei die Halterung (105) eine Erfassungseinrichtung umfasst, die ausgebildet ist, eine Anzahl von Sensorkapseltauschzyklen zu erfassen, so dass die Halterung (105) als weitere Funktionalität eine Sensorkapseltauschzyklenverfolgungsfunktionalität aufweist.

7. Sensorvorrichtung (101) nach einem der Ansprüche 1 bis 6, wobei die Halterung (105) einen Prozessor umfasst, der ausgebildet ist, den oder die Sensoren (107) zu programmieren, so dass die Halterung (105) als weitere Funktionalität eine Sensorprogrammierungsfunktionalität aufweist.

8. Sensorvorrichtung (101) nach einem der vorherigen Ansprüche, wobei die Sensorkapsel (103) eine Kommunikationsschnittstelle aufweist, die ausgebildet ist, Sensordaten des oder der Sensoren (107) über ein Kommunikationsnetzwerk zu senden.

9. Sensorvorrichtung (101) nach einem der vorherigen Ansprüche, wobei die Halterung (105) und/oder die Sensorkapsel (103) eine Energieübertragungseinrichtung, insbesondere eine Spule, zum drahtlosen Übertragen von elektrischer Energie von der Sensorkapsel (103) zur Halterung (105) und/oder umgekehrt umfassen.

10. Sensorvorrichtung (101) nach einem der vorherigen Ansprüche, wobei die Sensorkapsel (103) und/oder die Halterung (105) einen Prozessor umfassen, der ausgebildet ist, eine Identifikation aus der Halterung (105) respektive der Sensorkapsel (103) auszulesen, zum Beispiel induktiv auszulesen, insbesondere mittels Spulen.

11. Sensorvorrichtung (101) nach einem der vorherigen Ansprüche, wobei die lösbare Befestigung mittels eines Bajonettverschlusses und/oder mittels einer Verschraubung und/oder mittels einer Verrastung und/oder mittels einer Verklipsung und/oder mittels einer Klebverbindung und/oder mittels eines Einlegens der Sensorkapsel (103) in die Halterung (105) gebildet ist.

12. Sensorvorrichtung (101) nach einem der vorherigen Ansprüche, wobei der oder die Sensoren einen oder mehrere der folgenden Sensoren (107) umfassen: einen Umfeldsensor, einen Parksensor zum Erfassen eines Belegtzustands einer Parkposition, einen Verkehrssensor zum Überwachen eines Verkehrsflusses und/oder zum Messen einer Verkehrsdichte und einen Lagersensor zum Überwachen einer Containerbelegung.

13. Sensorvorrichtung (101) nach einem der vorherigen Ansprüche, wobei die Verkehrsinfrastruktur (115) einen Parkplatz umfasst, innerhalb welchem die Halterung (105) befestigt ist, oder eine Straße umfasst, an welcher die Halterung (105) befestigt ist, oder ein Containerlager umfasst, innerhalb welchem die Halterung (105) befestigt ist.

## Claims

1. Sensor apparatus (101) comprising:
- a sensor capsule (103) which complies with a predetermined type of protection according to the known IP codes,
- inside which one or more sensors (107) are arranged, and
- a holder (105),
- wherein the holder (105) is fastened to a traffic infrastructure (115), and
- wherein the sensor capsule (103) is releasably fastened in the holder (105),
**characterized in that**
the holder (105) also has one or more further electrical or electronic functionalities in addition to the fastening functionality.

2. Sensor apparatus (101) according to Claim 1, wherein the holder (105) has a communication interface which is designed to transmit sensor data from the sensor(s) (107) via a communication network, with the result that the holder (105) has a communication functionality as a further functionality.

3. Sensor apparatus (101) according to Claim 2, wherein the communication interface is designed to receive the sensor data from the sensor(s) (107) by means of an optical and/or electrical communication connection.

4. Sensor apparatus (101) according to one of Claims 1 to 3, wherein the holder (105) has an electrical energy store for supplying the sensor(s) (107) with electrical energy, with the result that the holder (105) has an energy supply functionality as a further functionality.

5. Sensor apparatus (101) according to one of Claims 1 to 4, wherein the holder (105) has a data memory for storing sensor data from the sensor(s) (107) and an electrical energy store for buffering the sensor data stored in the data memory, with the result that the holder (105) has a sensor data storage functionality and a sensor data buffer functionality as further functionalities.

6. Sensor apparatus (101) according to one of Claims 1 to 5, wherein the holder (105) comprises a capture device which is designed to capture a number of sensor capsule replacement cycles, with the result that the holder (105) has a sensor capsule replacement cycle tracking functionality as a further functionality.

7. Sensor apparatus (101) according to one of Claims 1 to 6, wherein the holder (105) comprises a processor which is designed to program the sensor(s) (107), with the result that the holder (105) has a sensor programming functionality as a further functionality.

8. Sensor apparatus (101) according to one of the preceding claims, wherein the sensor capsule (103) has a communication interface which is designed to transmit sensor data from the sensor(s) (107) via a communication network.

9. Sensor apparatus (101) according to one of the preceding claims, wherein the holder (105) and/or the sensor capsule (103) comprise(s) an energy transmission device, in particular a coil, for wirelessly transmitting electrical energy from the sensor capsule (103) to the holder (105) and/or vice versa.

10. Sensor apparatus (101) according to one of the preceding claims, wherein the sensor capsule (103) and/or the holder (105) comprise(s) a processor which is designed to read, for example inductively read, an identification from the holder (105) or from the sensor capsule (103), in particular by means of coils.

11. Sensor apparatus (101) according to one of the preceding claims, wherein the releasable connection is formed by means of a bayonet closure and/or by means of screwing and/or by means of latching and/or by means of clipping and/or by means of an adhesive bond and/or by inserting the sensor capsule (103) into the holder (105).

12. Sensor apparatus (101) according to one of the preceding claims, wherein the sensor(s) comprise(s) one or more of the following sensors (107): a surroundings sensor, a parking sensor for capturing an occupied state of a parking position, a traffic sensor for monitoring a traffic flow and/or for measuring a traffic density and a warehouse sensor for monitoring container occupancy.

13. Sensor apparatus (101) according to one of the preceding claims, wherein the traffic infrastructure (115) comprises a parking space inside which the holder (105) is fastened, or comprises a road to which the holder (105) is fastened, or comprises a container warehouse inside which the holder (105) is fastened.

## Revendications

1. Dispositif de détection (101) comprenant :
- une capsule de détection (103) qui satisfait à un type de protection prédéterminé conforme au code IP connu,
- à l'intérieur de laquelle sont disposés un ou plusieurs capteurs (107), et
- un support (105),
- dans lequel le support (105) est fixé à une infrastructure routière (115) et
- dans lequel la capsule de détection (103) est fixée de manière amovible dans le support (105),
**caractérisé en ce que** le support (105) présente une ou plusieurs autres fonctionnalités électriques ou électroniques en plus de la fonctionnalité de fixation.

2. Dispositif de détection (101) selon la revendication 1, dans lequel le support (105) comporte une interface de communication qui est conçue pour transmettre des données de détection du ou des capteurs (107) par l'intermédiaire d'un réseau de communication, de sorte que le support (105) présente une fonctionnalité de communication en tant que fonctionnalité supplémentaire.

3. Dispositif de détection (101) selon la revendication 2, dans lequel l'interface de communication est conçue pour recevoir les données de détection en provenance du ou des capteurs (107) au moyen d'une liaison de communication optique et/ou électrique.

4. Dispositif de détection (101) selon l'une des revendications 1 à 3, dans lequel le support (105) comporte un accumulateur d'énergie électrique destiné à alimenter en énergie électrique le ou les capteurs (107), de sorte que le support (105) présente une fonctionnalité d'alimentation en énergie en tant que fonctionnalité supplémentaire.

5. Dispositif de détection (101) selon l'une des revendications 1 à 4, dans lequel le support (105) comporte une mémoire de données destinée à stocker des données de détection du ou des capteurs (107) et un accumulateur d'énergie électrique destiné à mettre en mémoire tampon les données de détection stockées dans la mémoire de données, de sorte que le support (105) présente une fonctionnalité de stockage de données de détection et une fonctionnalité de tampon de données de détection en tant que fonctionnalités supplémentaires.

6. Dispositif de détection (101) selon l'une des revendications 1 à 5, dans lequel le support (105) comprend un moyen de détection qui est conçu pour détecter un nombre de cycles d'échange de capsules de détection, de sorte que le support (105) présente une fonctionnalité de suivi de cycles d'échange de capsules de détection en tant que fonctionnalité supplémentaire.

7. Dispositif de détection (101) selon l'une des revendications 1 à 6, dans lequel le support (105) comprend un processeur qui est conçu pour programmer le ou les capteurs (107), de sorte que le support (105) présente une fonctionnalité de programmation de capteurs en tant que fonctionnalité supplémentaire.

8. Dispositif de détection (101) selon l'une des revendications précédentes, dans lequel la capsule de détection (103) comporte une interface de communication qui est conçue pour transmettre des données de détection du ou des capteurs (107) par l'intermédiaire d'un réseau de communication.

9. Dispositif de détection (101) selon l'une des revendications précédentes, dans lequel le support (105) et/ou la capsule de détection (103) comprennent un moyen de transmission d'énergie, en particulier une bobine, pour la transmission sans fil d'énergie électrique de la capsule de détection (103) au support (105) et/ou inversement.

10. Dispositif de détection (101) selon l'une des revendications précédentes, dans lequel la capsule de détection (103) et/ou le support (105) comprennent un processeur qui est conçu pour lire une identification à partir du support (105) ou de la capsule de détection (103), par exemple pour effectuer la lecture par induction, en particulier au moyen de bobines.

11. Dispositif de détection (101) selon l'une des revendications précédentes, dans lequel la fixation amovible est formée au moyen d'une fermeture à baïonnette et/ou au moyen d'un assemblage à vis et/ou au moyen d'un verrouillage et/ou au moyen d'un clipsage et/ou au moyen d'un assemblage par collage et/ou au moyen d'une insertion de la capsule de détection (103) dans le support (105).

12. Dispositif de détection (101) selon l'une des revendications précédentes, dans lequel le ou les capteurs comprennent un ou plusieurs des capteurs suivants (107) : un capteur d'environnement, un capteur de stationnement pour détecter l'état d'occupation d'un emplacement de stationnement, un capteur de trafic pour surveiller un flux de trafic et/ou mesurer une densité de trafic, et un capteur d'entrepôt pour surveiller une occupation par des conteneurs.

13. Dispositif de détection (101) selon l'une des revendications précédentes, dans lequel l'infrastructure routière (115) comprend un parc de stationnement dans lequel est monté le support (105), ou comprend une route sur laquelle est fixé le support (105), ou comprend un entrepôt de conteneurs à l'intérieur duquel est fixé le support (105).
